# EUROPEAN PATENT SPECIFICATION

(11) **EP 1 319 633 B1**
(45) Date of publication and mention of the grant of the patent: **24.08.2011**
(21) Application number: 02027924.6
(22) Date of filing: 13.12.2002
(51) Int. Cl.: C03B 9/447

(54) **Unit for gripping and handling glass articles on a machine for molding glass articles**
Vorrichtung zum Greifen und Transportieren von Glasartikeln in einer Glasformmaschine
Unité pour saisir et manipuler des articles de verre dans le cadre d'une machine à façonner des articles de verre

(30) Priority: 14.12.2001 IT TO20011167
(43) Date of publication of application: 18.06.2003
(73) Proprietor: Bottero S.p.A., 12010 Cuneo (IT)
(72) Inventor: Borsarelli, Gianclaudio, 12100 Cuneo (IT); Viada, Bruno, 12010 Madonna Delle Grazie (IT); Sesia, Carlo, 12100 Cuneo (IT); Armando, Lorenzo, 12100 Cuneo (IT)
(74) Representative: Plebani, Rinaldo

(56) References cited:
- EP-A- 0 866 036
- EP-A- 0 963 956
- DE-A- 4 231 454
- GB-A- 2 095 863
- GB-A- 2 231 855
- US-A- 5 895 513
- PATENT ABSTRACTS OF JAPAN vol. 013, no. 187 (C-592), 2 May 1989 (1989-05-02) -& JP 01 014125 A (NIPPON TAISANBIN KOGYO KK), 18 January 1989 (1989-01-18)
- PATENT ABSTRACTS OF JAPAN vol. 2000, no. 14, 5 March 2001 (2001-03-05) -& JP 2000 327342 A (TOYO GLASS CO LTD), 28 November 2000 (2000-11-28)

## Description

The present invention relates to a unit for gripping and handling glass articles on a machine for molding glass articles, in particular a so-called I.S. molding machine.

As is known, I.S. machines comprise a number of molding sections, each comprising a rough mold, a finish mold, and a gripping and handling unit for gripping the glass articles formed in the relative finish mold and transferring them onto a supporting surface, from which they are fed onto a conveyor common to all the machine sections.

Known gripping and handling units comprise a supporting upright extending above the supporting surface and supporting a gripping device having a normally gripper-type gripping head, which is movable between a gripping position to remove the articles from the relative mold, and a release position to release the articles onto the supporting surface. The head is normally moved between said positions by means of an actuating device comprising a linear actuator normally housed in a cavity beneath the supporting surface and connected to the head by a gear transmission, normally a rack and pinion type extending at least partly through the upright.

Known actuating devices of the above type are unsatisfactory by, above all, failing to set the head to the same gripping and release positions at all times, so that the glass articles - just removed from the finish mold and therefor still hot and extremely fragile - are frequently damaged and at times even shattered, thus creating product quality and machine maintenance and cleaning problems. This is mainly due to the construction design of the actuating devices, and to the difficulty in controlling the devices, particularly after prolonged operation.

Moreover, the construction design of the actuating device and, in particular, the fact that it extends through the upright and beneath the supporting surface, make it difficult to replace and adjust the height of the gripping head to accommodate articles of different height.

Finally, the high operating temperature of the unit induces leakage of the lubricating fluids normally used to lubricate the moving parts of known devices, so that the unit, if not checked and serviced regularly, often operates in critical conditions resulting in rapid wear of component parts, and eventually in malfunctioning, unreliability and, above all, inaccuracy. GB2095863 shows a take-out mechanism having a vertical support carrying an electric motor, which has an output shaft extending along a hinge axis of the take-out arm.

It is an object of the present invention to provide a gripping and handling unit designed to provide a straightforward, low-cost solution to the above problems, and which, in particular, is compact, is easy to assemble and adjust, and provides for a high degree of reliability and efficiency.

According to the present invention, there is provided a unit for gripping and handling glass articles on a machine for molding glass articles, as defined in claim 1.

A non-limiting embodiment of the invention will be described by way of example with reference to the accompanying drawings, in which:
Figure 1 shows a schematic view in perspective of a preferred embodiment of the gripping and handling unit according to the present invention fitted to a machine, shown partly, for molding glass articles;
Figure 2 shows a larger-scale section of a detail of the Figure 1 gripping and handling unit.

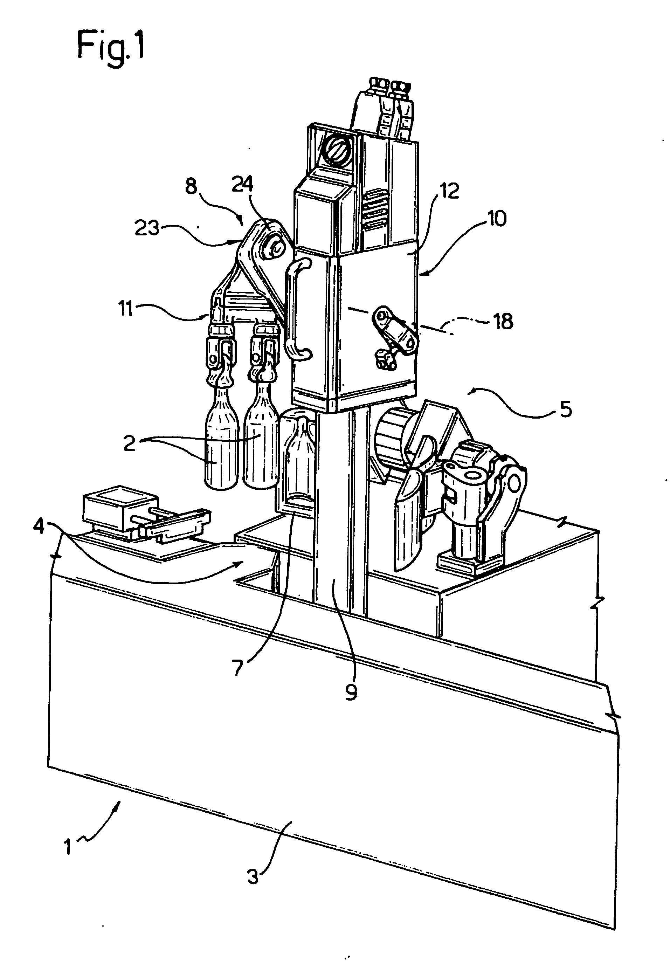

Number 1 in Figure 1 indicates as a whole a machine (shown partly) for molding glass articles, and in particular a so-called I.S. machine for molding hollow glass articles 2 - in the example shown, bottles. Machine 1 comprises a bed 3 defining a horizontal top supporting surface 4; and a number of molding sections 5, one of which is shown partly in Figure 1. Each molding section 5 comprises a rough mold (not shown); a finish mold 7; and a gripping and handling, or so-called "take-out", unit 8 for gripping articles 2 formed in finish mold 7, and transferring them onto surface 4, from which articles 2 are then pushed in known manner onto a belt conveyor common to all of molding sections 5.

As shown in Figure 1, unit 8 comprises a rectangular-section upright 9, which is fitted in known manner to bed 3, is adjustable in height, projects upwards above supporting surface 4, and is fitted on the top end with a substantially parallelepiped-shaped frame 10 supporting a known gripping head 11, not described in detail, for gripping and handling articles 2.

In the particular example described, frame 10 comprises two facing lateral portions or shoulders 12 and 13; and an annular intermediate portion 14, which defines an annular conduit 14a for a cooling fluid, and extends between lateral portions 12 and 13 to define, with portions 12 and 13, a cavity 15. Lateral portion 12 comprises a hollow hub 16 extending inside cavity 15, coaxially with a horizontal axis 18, and engaged by an intermediate portion 19 of a fixed supporting shaft 20 coaxial with axis 18. Shaft 20 also comprises an end portion 21 extending outside frame 10 and fitted in rotary and axially-fixed manner with an end portion 22 of a crank 23, an opposite end portion 24 of which is hinged to gripping head 11 about a hinge axis parallel to axis 18.

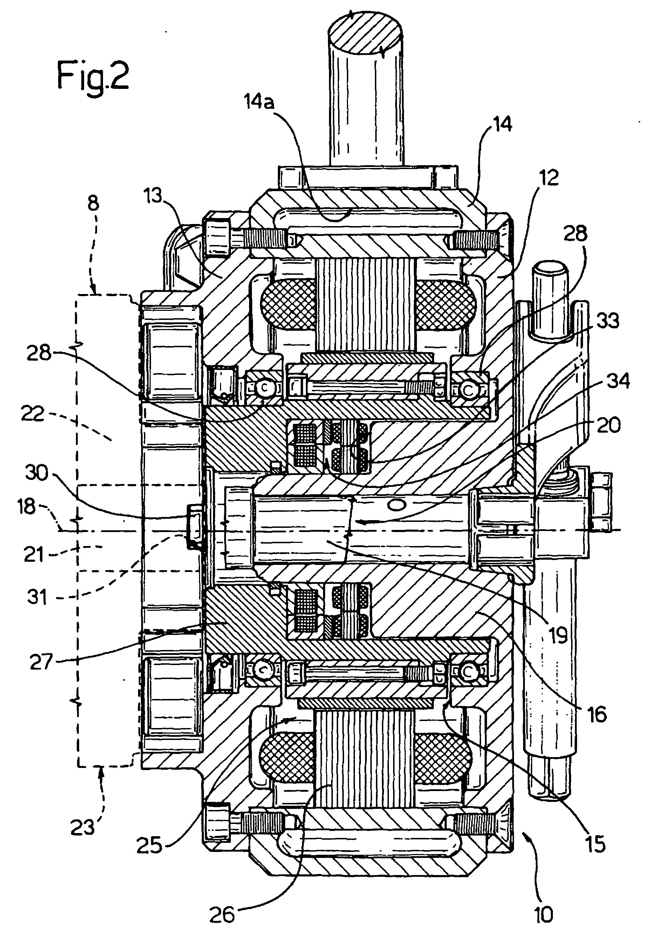

Crank 23 is rotated in opposite directions about axis 18 by a rotary motor 25, conveniently an electric motor housed in cavity 15 and coaxial with axis 18, to move gripping head 11 between a gripping position to remove articles 2 from finish mold 7, and a release position to release the removed articles 2 onto supporting surface 4. More specifically, motor 25 comprises an annular stator 26 connected integrally to intermediate portion 14; and a tubular rotor 27 extending between lateral portions 12 and 13, coaxially with axis 18, and connected to lateral portions 12 and 13 in rotary and axially-fixed manner by two bearings 28. Rotor 27 partly surrounds hub 16, and is connected to portion 22 of crank 23 in angularly-fixed manner by two axial teeth 30 (only one shown in Figure 2), which are integral with and project axially from rotor 27, and each of which engages in axially-sliding and angularly-fixed manner a respective axial seat 31 formed in portion 22 of crank 23. Rotor 27 and hub 16 are designed to define, between them, an airtight annular chamber 33 housing a known position transducer 34. Conveniently, motor 25 has an axial dimension substantially equal to that of frame 10 measured in the same direction, and which conveniently ranges between 100 and 200 mm and is preferably such that the outside dimension of frame 10, measured parallel to axis 18, is substantially equal to the outside dimension of upright 9 measured in the same direction.

Unlike known solutions, by virtue of unit 8 comprising a rotary motor, and the rotary motor being connected directly to the gripping head crank, movement of the crank is therefore extremely accurate to set the gripping head to the same gripping and release positions at all times, thus ensuring consistent quality of the articles in terms of shape and size.

Moreover, unlike known solutions, location of motor 25 coaxial with the crank rotation axis 18 provides for eliminating both the actuator beneath the supporting surface and the transmission through upright 9, so that, on the one hand, the space formerly occupied by the actuator is made available, and, on the other, upright 9 can be shaped and sized for maximum compactness and easy access to the components to the rear of gripping unit 8. What is more, eliminating the gripping head transmission components extending through the upright makes the gripping head much easier to change.

As regards dimensions above supporting surface 4, it should be pointed out that the axial dimensions of the motor provided are much smaller than those of ordinary motors, and practically equal to the dimensions of the upright measured in the same direction.

Finally, operating head 11 by means of a single rotary motor coaxial to axis 18 greatly simplifies the structure of supporting frame 10 and the sealing devices, which, by eliminating the lubricating fluid in frame 10 and upright 9, are restricted to straightforward dust seals.

Supporting frame 10 may be other than as described by way of example; and a motor other than the one described may be used, providing it is connected to the crank with no mechanical transmissions with relatively-moving parts in between.

## Claims

1. A unit (8) for gripping and handling glass articles (2) on a machine (1) for molding glass articles, the unit (8) comprising:
- supporting means (9, 10) fittable to a structure (3) of the molding machine (1);
- a gripping head (11) for engaging the glass articles (2) for removal;
- a crank (23) comprising a first portion (22) hinged to said supporting means (9, 10) to rotate about a first hinge axis (18), and a second portion (24) hinged to said gripping head to rotate about a second axis parallel to said first hinge axis (18); and
- actuating means (19, 25) for rotating said crank (23), with respect to said supporting means (9, 10), in opposite directions about said first hinge axis (18), and for moving the gripping head (11) between a gripping position and a release position respectively gripping and releasing the articles (2); said actuating means (19, 25) comprising a rotary electric motor (25) comprising a movable member (27) rotating about an axis coincident with said first hinge axis (18);
**characterised by** further comprising angular detecting means (34) for detecting the position of said movable member (27); and in that said motor comprises a tubular rotor (27) defining said movable member and housing said angular detecting means (34).

2. A unit as claimed in claim 1, **characterised in that** said supporting means comprise a frame (10), which in turn comprises two facing lateral portions (12) (13) and an intermediate circumferential annular portion (14) extending between said lateral portions (12)(13) and connected integrally to the lateral portions (12)(13); said tubular rotor (27) being connected to said lateral portions (12,13) in rotary and axially-fixed manner and defining, together with one of said lateral portions (12), an airtight chamber (33); said airtight chamber (33) housing said angular detecting means (34).

3. A unit as claimed in claim 2, **characterised in that** one of said lateral portion (12) comprises a hollow hub (16) extending coaxially with said first hinge axis (18); said tubular rotor (27) partly surrounding said hub (16); said airtight chamber (33) being defined by said tubular rotor (27) and said hollow hub (16).

4. A unit as claimed in claim 2 or 3, **characterised in that** said motor comprises a stator (26) which is connected integrally to said annular portion (14).

5. A unit as claimed in anyone of the claims 2 to 4, **characterized in that** said annular portion (14) defines a circumferential annular cooling conduit (14a).

6. A unit as claimed in anyone of claims 2 to 5, **characterized in that** said supporting means comprise an upright (9) for supporting the frame (10); the frame (10) being located at the top end of said upright (9), and having a maximum dimension, measured parallel to said first hinge axis (18), substantially equal to a dimension of said upright (9) measured in the same direction.

7. A unit as claimed in any one of claims 2 to 6, **characterized in that** said motor has an axial dimension, measured parallel to said first hinge axis (18), at most equal to that of said frame (10) measured in the same direction.

8. A unit as claimed in Claim 7, **characterized in that** said dimension ranges between 100 and 200 mm.

9. A unit as claimed in anyone of the preceding claims, **characterized in that** said first portion (22) of the crank (23) is connected directly to said tubular rotor (27) .

10. A unit as claimed in claim 9, **characterized in that** said tubular rotor (27) is connected to said crank (23) by angular coupling means with face teeth (30).

## Patentansprüche

1. Eine Einheit (8) zum Greifen und Befördern von Glasartikeln (2) an einer Maschine (1) zum Formen von Glasartikeln, wobei die Einheit (8) aufweist:
- Stützmittel (9, 10), die an einer Struktur (3) der Formmaschine (1) anbringbar sind,
- einen Greifkopf (11) zum Angreifen an den Glasartikeln (2) zum Entnehmen,
- eine Kurbel (23), aufweisend einen ersten Abschnitt (22), der an die Stützmittel (9, 10) angelenkt ist, um sich um eine erste Gelenkachse (18) zu drehen, und einen zweiten Abschnitt (24), der an den Greifkopf angelenkt ist, um sich um eine zweite Achse parallel zu der ersten Gelenkachse (18) zu drehen, und
- Betätigungsmittel (19, 25) zum Drehen der Kurbel (23) bezüglich der Stützmittel (9, 10) in entgegengesetzten Richtungen um die erste Gelenkachse (18) und zum Bewegen des Greifkopfes (11) zwischen einer Greifposition und einer Löseposition zum Greifen bzw. Loslassen der Artikel (2), wobei die Betätigungsmittel (19, 25) einen Rotationselektromotor (25) aufweisen, der ein bewegbares Element (27) aufweist, das sich um eine mit der ersten Gelenkachse (18) zusammenfallende Achse dreht,
**dadurch gekennzeichnet, dass** sie ferner Winkeldetektionsmittel (34) zum Detektieren der Position des bewegbaren Elements (27) aufweist und der Motor einen rohrförmigen Rotor (27) aufweist, der das bewegbare Element definiert und die Winkeldetektionsmittel (34) aufnimmt.

2. Eine Einheit gemäß Anspruch 1, **dadurch gekennzeichnet, dass** die Stützmittel einen Rahmen (10) aufweisen, der seinerseits zwei einander zugewandte Seitenabschnitte (12) (13) und einen dazwischenliegenden ringförmigen Umfangsabschnitt (14) aufweist, der sich zwischen den Seitenabschnitten (12) (13) erstreckt und einstückig mit den Seitenabschnitten (12) (13) verbunden ist, wobei der rohrförmige Rotor (27) drehbar und axialfest mit den Seitenabschnitten (12, 13) verbunden ist und zusammen mit einem der Seitenabschnitte (12) eine luftdichte Kammer (33) definiert, wobei die luftdichte Kammer (33) die Winkeldetektionsmittel (34) aufnimmt.

3. Eine Einheit gemäß Anspruch 2, **dadurch gekennzeichnet, dass** ein Seitenabschnitt (12) eine hohle Nabe (16) aufweist, die sich koaxial zu der ersten Gelenkachse (18) erstreckt, wobei der rohrförmige Rotor (27) die Nabe (16) teilweise umgibt, wobei die luftdichte Kammer (33) von dem rohrförmigen Rotor (27) und der hohlen Nabe (16) definiert wird.

4. Eine Einheit gemäß Anspruch 2 oder 3, **dadurch gekennzeichnet, dass** der Motor einen Stator (26) aufweist, der einstückig mit dem ringförmigen Abschnitt (14) verbunden ist.

5. Eine Einheit gemäß einem der Ansprüche 2 bis 4,
**dadurch gekennzeichnet, dass** der ringförmige Abschnitt (14) eine ringförmige Umfangs-Kühlleitung (14a) definiert.

6. Eine Einheit gemäß einem der Ansprüche 2 bis 5,
**dadurch gekennzeichnet, dass** die Stützmittel einen Ständer (9) zum Abstützen des Rahmens (10) aufweisen, wobei der Rahmen (10) am oberen Ende des Ständers (9) angeordnet ist und parallel zu der ersten Gelenkachse (18) gemessen eine Maximalabmessung aufweist, die im Wesentlichen gleich einer Abmessung des Ständers (9) ist, die in derselben Richtung gemessen wird.

7. Eine Einheit gemäß einem der Ansprüche 2 bis 6,
**dadurch gekennzeichnet, dass** der Motor parallel zu der ersten Gelenkachse (18) gemessen eine Axialabmessung aufweist, die, gemessen in derselben Richtung, höchstens gleich derjenigen des Rahmens (10) ist.

8. Eine Einheit gemäß Anspruch 7, **dadurch gekennzeichnet, dass** die Abmessung zwischen 100 mm und 200 mm liegt.

9. Eine Einheit gemäß einem der vorhergehenden Ansprüche, **dadurch gekennzeichnet, dass** der erste Abschnitt (22) der Kurbel (23) direkt mit dem rohrförmigen Rotor (27) verbunden ist.

10. Eine Einheit gemäß Anspruch 9, **dadurch gekennzeichnet dass** der rohrförmige Rotor (27) durch Winkelkupplungsmittel mit Außenzähnen (30) mit der Kurbel (23) verbunden ist.

## Revendications

1. Unité (8) pour saisir et manipuler des articles en verre (2) sur une machine (1) pour mouler les articles en verre, l'unité (8) comprenant :
- des moyens de support (9, 10) pouvant être montés sur une structure (3) de la machine de moulage (1) ;
- une tête de préhension (11 pour coopérer avec les articles en verre (2) pour le retrait ;
- une manivelle (23) comprenant une première partie (22) articulée sur lesdits moyens de support (9, 10) pour tourner autour d'un premier axe d'articulation (18), et une seconde partie (24) articulée sur ladite tête de préhension pour tourner autour d'un second axe parallèle audit premier axe d'articulation (18) ; et
- des moyens d'actionnement (19, 25) pour faire tourner ladite manivelle (23) par rapport auxdits moyens de support (9, 10), dans des directions opposées autour dudit premier axe d'articulation (18), et pour déplacer la tête de préhension (11) entre une position de préhension et une position de relâchement pour respectivement prendre et relâcher les articles (2) ; lesdits moyens d'actionnement (19, 25) comprenant un moteur électrique rotatif (25) comprenant un élément mobile (27) tournant autour d'un axe coïncidant avec ledit premier axe d'articulation (18) ;
**caractérisée en ce qu'**elle comprend en outre des moyens de détection angulaire (34) pour détecter la position dudit élément mobile (27), et **en ce que** ledit moteur comprend un rotor tubulaire (27) définissant ledit élément mobile et renfermant lesdits moyens de détection angulaire (34).

2. Unité telle que revendiquée dans la revendication 1, **caractérisée en ce que** lesdits moyens de support comprennent un châssis (10) qui, à son tour, comprend deux parties latérales opposées se faisant face (12) (13) et une partie annulaire circonférentielle intermédiaire (14) s'étendant entre lesdites parties latérales (12) (13) et qui est reliée solidairement aux parties latérales (12) (13), ledit rotor tubulaire (27) étant relié auxdites parties latérales (12) (13), de façon mobile en rotation et fixe dans la direction axiale et définissant, avec une desdites parties latérales (12), une chambre étanche à l'air (33), ladite chambre étanche à l'air (33) renfermant lesdits moyens de détection angulaire (34).

3. Unité telle que revendiquée la revendication 2, **caractérisée en ce qu'**une desdites parties latérales (12) comprend un moyeu creux (16) s'étendant coaxialement audit premier axe d'articulation (18), ledit rotor tubulaire (27) entourant partiellement ledit moyeu (16), ladite chambre étanche à l'air (33) étant définie par ledit rotor tubulaire (27) et par ledit moyeu creux (16).

4. Unité telle que revendiquée dans la revendication 2 ou 3, **caractérisée en ce que** ledit moteur comprend un stator (26) qui est relié solidairement à ladite partie annulaire (14).

5. Unité telle que revendiquée dans l'une quelconque des revendications 2 à 4, **caractérisée en ce que** ladite partie annulaire (14) définit un conduit de refroidissement annulaire circonférentiel (14a).

6. Unité telle que revendiquée dans l'une quelconque des revendications 2 à 5, **caractérisée en ce que** lesdits moyens de support comprennent un montant (9) pour supporter le châssis (10), le châssis (10) étant disposé à l'extrémité supérieure dudit montant (9), et ayant une dimension maximale, mesurée parallèlement audit premier axe d'articulation (18), sensiblement égale à une dimension dudit montant (9) mesurée dans la même direction.

7. Unité telle que revendiquée dans l'une quelconque des revendications 2 à 6, **caractérisée en ce que** ledit moteur a une dimension axiale, mesurée parallèlement audit premier axe d'articulation (18), au plus égale à celle dudit châssis (10), mesurée dans la même direction.

8. Unité telle que revendiquée dans la revendication 7, **caractérisée en ce que** ladite dimension est comprise entre 100 et 200 mm.

9. Unité telle que revendiquée dans l'une quelconque des revendications précédentes, **caractérisée en ce que** ladite première partie (22) de la manivelle (23) est reliée directement audit rotor tubulaire (27).

10. Unité telle que revendiquée dans la revendication 9, **caractérisée en ce que** ledit rotor tubulaire (27) est relié à ladite manivelle (23) par des moyens de couplage angulaire comportant des dents de champ (30).
